(19) Europäisches Patentamt
European Patent Office
Office européen des brevets

(11) **EP 1 597 816 B1**

(12) **EUROPÄISCHE PATENTSCHRIFT**

(45) Veröffentlichungstag und Bekanntmachung des Hinweises auf die Patenterteilung:
**29.03.2017 Patentblatt 2017/13**

(21) Anmeldenummer: **04713844.1**

(22) Anmeldetag: **24.02.2004**

(51) Int Cl.:
**H02P 6/14** *(2016.01)*

(86) Internationale Anmeldenummer:
**PCT/DE2004/000334**

(87) Internationale Veröffentlichungsnummer:
**WO 2004/077657 (10.09.2004 Gazette 2004/37)**

(54) **VERFAHREN ZUR LEISTUNGSOPTIMALEN ANSTEUERUNG VON BLDC-MOTOREN**

METHOD FOR EFFECTING THE POWER-OPTIMAL CONTROL OF BLDC MOTORS

PROCEDE D'EXCITATION AVEC UNE PUISSANCE OPTIMALE DE MOTEURS A COURANT CONTINU SANS BALAIS

(84) Benannte Vertragsstaaten:
**AT BE BG CH CY CZ DE DK EE ES FI FR GB GR HU IE IT LI LU MC NL PT RO SE SI SK TR**

(30) Priorität: **27.02.2003 DE 10308859**

(43) Veröffentlichungstag der Anmeldung:
**23.11.2005 Patentblatt 2005/47**

(73) Patentinhaber: **Melexis Technologies NV**
**3980 Tessenderlo (BE)**

(72) Erfinder:
• **LINDEMANN, Harald**
**99448 Nauendorf (DE)**
• **STURM, Joergen**
**99425 Weimar (DE)**

(74) Vertreter: **Leonhard, Frank Reimund**
**Leonhard & Partner**
**Patentanwälte**
**Postfach 10 09 62**
**80083 München (DE)**

(56) Entgegenhaltungen:
**WO-A-03/107526    US-A- 5 317 243**
**US-A- 5 616 996**

**Beschreibung**

Die Erfindung betrifft eine Verfahrensweise und eine Schaltung zur verbesserten, insbesondere fehler-toleranten Ansteuerung eines mehrphasigen (typisch dreiphasig) bürstenlosen Gleichstrommotors (**b**rushless **d**irecct **c**urrent **m**otor: BLDC-Motor) unter Zuhilfenahme einer permanent gemessenen Bewegungsinformation durch Auswertung der Zeitpunkte der Richtungsumkehr der induzierten Spannung (Nulldurchgang) in zwei nicht bestromten Motorspulen, die im zeitlichen Ablauf unmittelbar nacheinander den Kommutierungszeitpunkt durchliefen.

BLDC-Motoren werden mit einem elektromagnetischen Drehfeld angesteuert, welches synchron zum Rotorfeld umläuft. Die Synchronität der Felder sowie ihre Phasendifferenz sind entscheidend für die Effizienz des Betriebes dieses Motortyps. Es ist also verständlich, dass zum Betrieb eine Information über die momentane Phasendifferenz beider Felder jederzeit nötig ist.

Bei BLDC-Motoren mit Hall-Elementen erzeugen diese die benötigte Positions-Information. Diese Information wird dann direkt in die Umschaltung der Motorphasen (die Kommutierung) übersetzt, der Winkel zwischen Stator und Rotorfeld ist damit fest eingestellt. Das entspricht einem von Motortyp, Drehzahl und Lastmoment abhängigen, singulären Arbeitspunkt; nur dort ist ein optimaler Motorbetrieb gewährleistet.

In der WO 2001 37419 (SGS-Thomson) wird ein Verfahren zur Verschiebung des Kommutierungs-Zeitpunkts eines BLDC-Motors beschrieben, dessen Ständerwicklungen von einer mehrphasigen Umrichterschaltung gespeist werden. Die Umrichterschaltung enthält eine Endstufenansteuerung, eine Kommutierungslogik, einen Phasenselektor und einen Phasensdiskriminator. Einer Kommutierungs-Erkennung wird der von einem Phasenselektor festgestellte aktuelle Wert der in einer unbestromten Phase induzierten Spannung auf einen Eingang und eine Referenzspannung auf einen zweiten Eingang zum Vergleich zugeführt. Die Referenzspannung ist von einer Kommutierungs-Verschiebung entsprechend einer bestimmten Kurve veränderbar. Der Kommutierungs-Verschiebung wird von einer Stellgrößen-Berechnung ein Sollwert in Abhängigkeit von der Solldrehzahl des Motors zugeführt. Durch die sollwertabhängige Kommutierungs-Verschiebung wird auch bei hohen Drehzahlen und starker Last ein hohes Drehmoment zur Verfügung gestellt und die Momentenwelligkeit klein gehalten.

Eine ohne Sensoren arbeitende Kommutierungsschaltung wird in EP 231 046 (Philips) beschrieben, bei dem jede Phase in Abhängigkeit von Spannungen, die das permanentmagnetische Feld des Läufers in die Wicklungen induziert, mittels elektronischer Schaltelemente je nach Kommutierungszustand zur Durchführung von Kommutierungsschritten an Minus- und/oder Pluspol einer Gleichstromquelle schaltbar ist, wobei in der Steuerschaltung ein Vergleichssignal erzeugt wird, das angibt, ob das Vorzeichen derjenigen Wicklungsspannung, die nicht mittels der elektronischen Schaltelemente an die Gleichstromquelle geschaltet ist, mit einem in Abhängigkeit vom jeweiligen Kommutierungszustand vorgegebenen Vorzeichen übereinstimmt, und andernfalls bei nicht übereinstimmendem Vorzeichen kommutiert wird.

JP 2002 034277 (Fujitsu) hält im Fall der Veränderung der Umdrehungs-Geschwindigkeit des Motors bei einer Umdrehung den Fehler bei der Motorsteuerung dadurch klein, dass Mittelwerte aller gemessenen Rotorsektorenpositionen einer vollen Umdrehung des Rotors zur rechnerischen Bestimmung des Zeitintervalls von einer Rotorposition zur nächsten und Fehler der entsprechenden Positions-Bestimmung herangezogen werden, wonach die Zeitpunkte der Energiezuführung gesteuert werden.

Diese Verfahrensweisen sind gegenüber der hier angegebenen erfinderischen Lösung weniger effektiv, d.h. die Zeit zwischen einer Registrierung des veränderten Laufs und dem aktiven Einwirken zur Korrektur des Fehlers ist länger.

Als Stand der Technik ist auch US5317243 bekannt.

Es ist Aufgabe der Erfindung, die Reaktionszeiten des aktiven Gegenwirkens gegen eine lastabhängige Drehzahl- oder Drehmomentveränderung bei BLDC-Motoren zu verkürzen. Damit soll die Ansteuerung fehlertolerant und leistungsoptimal werden, besonders bei einem Ausbleiben einer an sich benötigten ungestörten, permanenten Positionsinformation. Erfindungsgemäß wird dazu nach Anspruch 1 oder Anspruch 8 vorgeschlagen, dass in jedem Motorzustand lastabhängig der Kommutierungs-Zeitpunkt, also das Schalten in den nachfolgenden Motorzustand, aktiv beeinflusst wird.

Die dazu nötige momentane Positionsinformation wird permanent gewonnen. Sie kann aus dem Anschluss der jeweils freilaufenden Motorwicklung durch elektromagnetische Induktion oder durch intelligente Auswertung der Hall-Signale gewonnen werden. Damit kann die Ansteuerung von sensorlosen und Hall-kommutierten BLDC-Motoren lastabhängig dynamisch optimiert werden. Notwendige Korrekturen sind jederzeit möglich, bezogen auf den Schaltpunkt (der Kommutierung).

**Beispiele** erläutern die Erfindung.

Figur 1     zeigt eine Kommutierung bei einem BLDC-Motor.

Figur 2     eine erste digitale Realisierung eines Schaltens.

Figur 2a    eine zweite digitale Realisierung eines Schaltens.

Figur 3     Mikroprozessor zur Ermittlung der Positionierungsinformation.

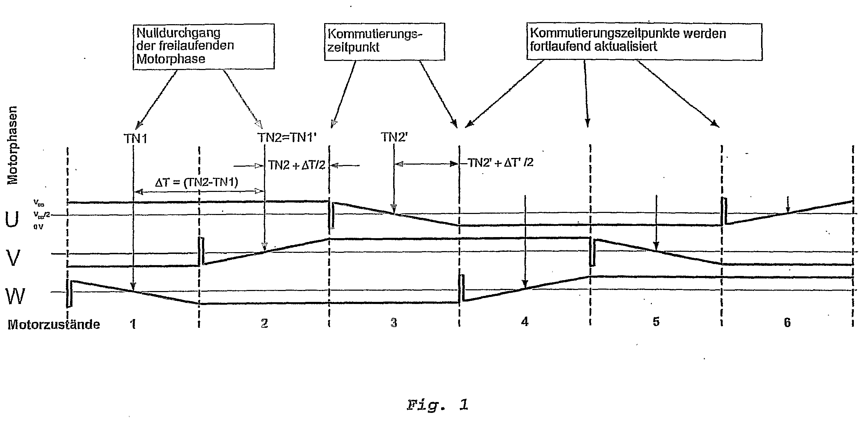

Die Erfindung wird beispielhaft anhand eines dreiphasigen Motorsystems näher beschrieben werden. Es können beliebige BLDC-Motoren, sensorlos oder mit Hall-Elementen bei beliebiger Polpaar-Zahl in Stern- oder Dreieck-Schaltung angesteuert werden. Prinzipiell ist das Verfahren aber auch auf mehrphasige Systeme diesbezüglich erweiterbar.
Die Anzahl der Magnetpole des Rotors ist für das Verfahren ohne Bedeutung.
Da sich mehrpolige Systeme immer auf ein zweipoliges System abbilden lassen, wird in der weiteren Beschreibung von einem zweipoligen System ausgegangen.
Das erforderliche Stator-Drehfeld wird dem Motor durch aufeinander folgende, umlaufende Rechtecksignale an jeweils zwei der drei Motorphasen in bekannter Weise aufgeprägt. Diese Signale können pulsweitenmoduliert sein (PWM), um die effektive Energie zu beeinflussen bzw. die Schaltflanken einer idealen sinusförmigen Ansteuerung zu nähern. Weiterhin wird auf die Erzeugung des Rotormagnetfeldes nicht eingegangen, da es für den wesentlichen Teil des Vorgehens nicht von Bedeutung ist. Der Einfachheit halber wird es als konstant und durch einen Permanentmagneten erzeugt angenommen.
Zur Implementierung des Verfahrens ist eine permanent vorliegende Positionsinformation nötig. Da diese durch die Auswertung der Richtungsumkehr der induzierten Spannung in einer jeweils nicht bestromten Motorspule gewonnen werden kann, wird sie nachfolgend als "Nulldurchgang" bezeichnet.
Als "Motorzustand" wird das konstante Anliegen einer Spannung (mit oder ohne Pulsweitenmodulation) an zwei Motorphasen bezeichnet. Die Umschaltung der Spannung an andere Motorphasen wird als "Kommutierung" oder "Zustandswechsel" bezeichnet (siehe Fig. 1).
Ist der BLDC-Motor 14 soweit angelaufen, dass stabile Nulldurchgänge beobachtet werden, wird die Regelung in Betrieb genommen. Dazu wird die Zeitinformation $\Delta T$ zwischen dem Nulldurchgang TN1 im letzten Motorzustand und dem Nulldurchgang TN2 im unmittelbar folgenden aktuellen Motorzustand gemessen

$$\Delta T = (TN2 - TN1).$$

Von dem betreffenden Zeitpunkt TN2 an wird nach der halben Zeitspanne zwischen den letzten beiden Nulldurchgängen, das ist $\Delta T/2$ (oder einem entsprechend korrigierten Wert) aktiv in den folgenden Motorzustand geschaltet

$$T_{Kommutierung} = TN2 + ( \Delta T / 2 ) \hspace{3cm} [1].$$

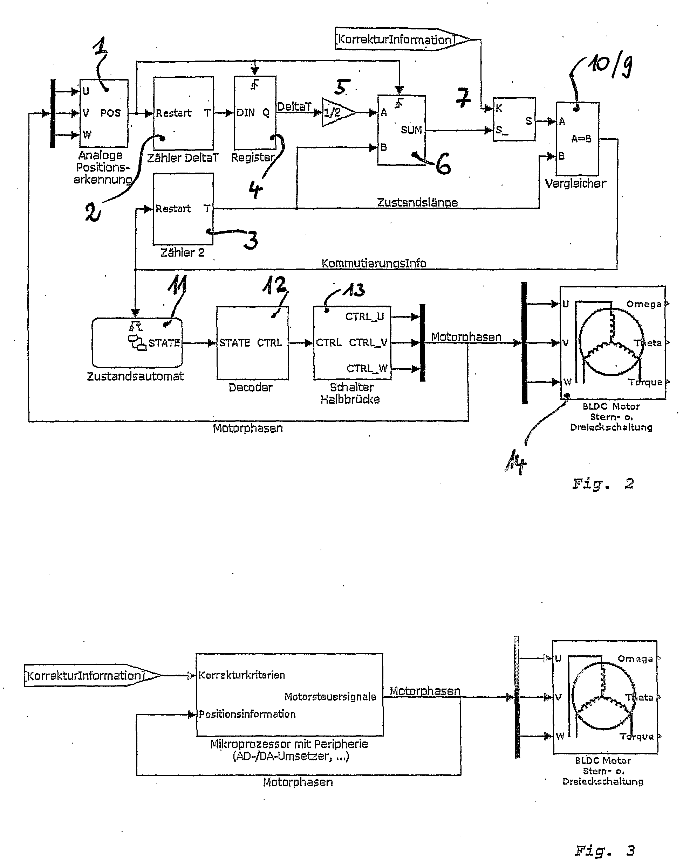

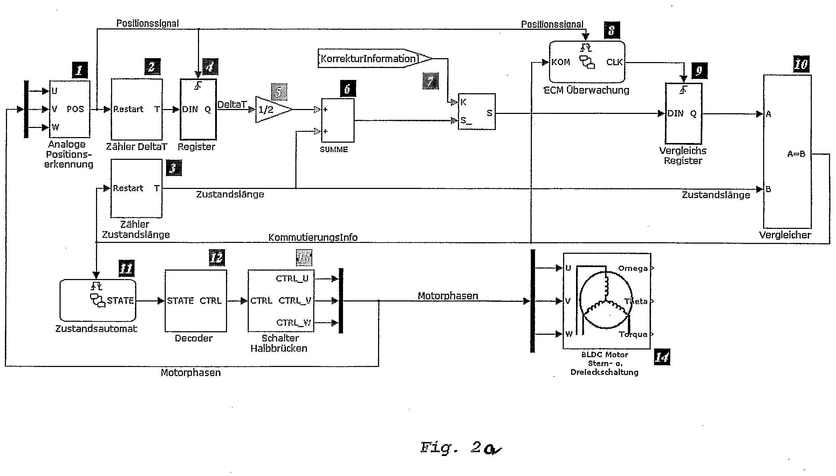

Dieses Verfahren wird fortlaufend angewendet. Es erfolgt also eine Beeinflussung vor jedem Schalten in den Nachfolgezustand.
Die Zeitpunkte des jeweiligen Nulldurchganges sind lastabhängig; somit ist ein Schalten nach diesem Algorithmus [1] in der Lage, unmittelbar auch auf sprunghafte Lastwechsel zu reagieren.
Um den energieoptimalen Zeitpunkt der Kommutierung zu bestimmen ist es nötig, die Zeit in der Berechnung zu berücksichtigen, die zum Abbau der Energie in der nicht bestromten, zur Positionsmessung verwendeten Motorphase beim Umschalten in den nicht aktiv mit Strom versorgten Zustand benötigt wird. Dazu sind entsprechende Maßnahmen vorzusehen, sofern die Positionsinformation wie beschrieben gewonnen wird.
Aufgrund der Motorgeometrie und dadurch bedingte Kennlinienverläufe des Drehmomentes kann es erforderlich sein, den durch den Algorithmus gewonnenen Kommutierungszeitpunkt nachträglich zu korrigieren. Die Dynamik des Verfahrens bleibt davon unbeeinflusst.
Sowohl durch das Umschalten, als auch durch mögliche Verwendung pulsweitenmodulierter Signale treten Störungen auf dem Spannungssignal der freilaufenden Motorphase auf. Diese sind entsprechend intelligent zu filtern.
Als Beispiel einer möglichen Realisierung des Schaltens nach dem beschriebenen Algorithmus wird eine überwiegend digitale Realisierung zu Grunde gelegt, wobei eine Mischung aus Hard- und Software vorliegen kann (siehe hierzu Fig. 2 und 2a).
Eine analoge Eingangsschaltung 1 (ADC oder intelligenter Komparator) liefert die Positionsinformation. Diese wird geeignet gefiltert der nachfolgenden digitalen Steuereinheit bereitgestellt. Die digitale Steuerung umfasst im Wesentlichen zwei programmierbare Zähler, einen Zustandsautomaten 11, einige Zwischenspeicher und einen Dekoder 12. Ein Zähler 2 wertet die Positionsinformation zwischen jeweils den aufeinander folgenden Zuständen aus, zu

$$\Delta T = (TN2-TN1),$$

und legt die gemessene Differenz $\Delta T$ in einem Zwischenspeicher 4 ab.

Ein weiterer lesbarer Zähler wird zu Beginn jedes Motorzustandes gestartet. Erreicht er den Wert $TN2+\Delta T/2$, wird der Zustandsautomat 11 getriggert. Dieser führt die Kommutierung der Motorsignale aus, aktiviert also den jeweiligen Folgezustand.

Zur Motoransteuerung werden Schalter-Halbbrücken 13 verwendet, die Ansteuersignale werden direkt aus dem Zustandsvektor dekodiert 12. Auf die Darstellung einer Pulsweitenmodulation (PWM) der Brückensignale wurde zugunsten der besseren Übersichtlichkeit in diesem Realisierungsbeispiel verzichtet.

Möglich ist ebenso die Umsetzung des Verfahrens in einem Mikroprozessor-Schaltkreis, der die Ermittelung der Positionierungsinformationen, z.B. mittels Analog-Digital-Umsetzern gestattet und über Ausgänge verfügt, die den Motor 14 direkt oder über Leistungsschalter steuern können (siehe Fig. 3).

Vorteile der digitalen Realisierung der Steuerung nach dem verfahrensspezifischen Algorithmus [1] sind:

- Einflussmöglichkeiten bei Ausbleiben der ECM-Information.
- Korrekturen sind in jedem Teilschritt des Algorithmus anwendbar.
- Es ist auch für pulsweitenmodulierte Signale anwendbar.
- Eine Optimierung für Vorwärts- und Rückwärtslauf ist gleichzeitig möglich, auch bei Hall-kommutierten BLDC-Motoren.

**Patentansprüche**

1. **Verfahren** zur fehlertoleranten, leistungsoptimalen Ansteuerung eines bürstenlosen Gleichstrommotors (BLDC;14) durch fortlaufend aktualisierte Kommutierungszeitpunkte, die einem Schaltalgorithmus folgend, bei einem Ausbleiben einer ungestörten, permanenten Positionsinformation, gewonnen oder bestimmt werden, wobei

   - eine Zeitdifferenz ($\Delta T$) zwischen den Zeitpunkten (TN1, TN2) zweier unmittelbar aufeinander folgender Nulldurchgänge der Spannungen zweier Motorphasen gemessen wird,
   - eine halbe Zeitdifferenz ($\Delta T/2$) berechnet wird (5),
   - eine Kommutierung der zeitlich nächstfolgende Motorphase nach Ablauf der halben Zeitdifferenz ($\Delta T/2$) durchgeführt wird, gerechnet vom Zeitpunkts (TN2) des Nulldurchgangs der gemessenen zweiten Motorphase,
   - bei dem Ausbleiben der ungestörten, permanenten Positionsinformation aus einer analogen Positionserkennung (1) eine zuletzt ermittelte Kommutierungs-Zustandslänge weiter verwendet wird,
   - diese Verfahrensschritte sich fortsetzen, wobei der Schaltalgorithmus zur nächsten Kommutierung ($T_{Kommutierung} = TN2+(\Delta T/2)$) fortlaufend für alle Phasen fortgesetzt wird und zu der fehlertoleranten und leistungsoptimalen Ansteuerung des bürstenlosen Gleichstrom-Motors angewendet wird.

2. Verfahren nach Anspruch 1, wobei der Betrag der halben Zeitdifferenz ($\Delta T/2$) korrigiert wird, indem eine Zeit in der Berechnung berücksichtigt wird, die zum Abbau der Energie in einer zur Positionsmessung verwendeten Motorphase beim Umschalten in den nicht aktiv mit Strom versorgten Zustand benötigt wird.

3. Verfahren nach Anspruch 1 oder 2, wobei der Kommutierungszeitpunkt ($T_{Kommutierung}$) nachträglich für einen angepassten Betrieb entsprechend der Drehmoment-Kennlinien korrigiert wird, welche durch eine Motorgeometrie vorgegeben ist, wie Bauform, Anzahl der Rotor-/Stator-Pole.

4. Verfahren nach Anspruch 1, wobei

   - eine analoge Eingangsschaltung (ADC,1) vorgesehen ist, die Positionsinformation liefert, welche gefiltert einer nachfolgenden digitalen Steuereinheit bereitgestellt werden;
   - die digitale Steuereinheit zwei programmierbare Zähler (2,3), einen Zustandsautomaten (11), einige Zwischenspeicher und einen Dekoder umfasst;
   - der eine Zähler (2) die Positionsinformation zwischen jeweils den aufeinander folgenden Zuständen ($\Delta T=$(TN2-

TN1)) auswertet und eine ausgewertete Differenz in einem Zwischenspeicher (4) ablegt;
- der andere Zähler (3) zu Beginn jedes Motorzustandes gestartet wird;
- der Zustandsautomat (11) getriggert wird, wenn der andere Zähler (3) einen vorgegebenen Wert (TN2+∆T/2) erreicht, und der Zustandsautomat die Kommutierung der Motorsignale ausführt und den jeweiligen Folgezustand aktiviert;
- die Motoransteuerung durch Schalter-Halbbrücken (13) erfolgt, und die Ansteuersignale für den Motor direkt aus einem Zustandsvektor dekodiert werden.

5. Verfahren nach Anspruch 4, wobei die Differenz gemessen wird.

6. Verfahren zur leistungsoptimalen Ansteuerung nach Anspruch 5, wobei ein Mikroprozessor für die Umsetzung des Algorithmus Zeitmessungen und Berechnungen vornimmt, und Motor-Ansteuersignale über Software oder eine Kombination aus Hard- und Software erzeugt.

7. Verfahren zur leistungsoptimalen Ansteuerung nach Anspruch 1, wobei die Zeitdifferenz (∆T) zwischen den zwei unmittelbar aufeinander folgenden Nulldurchgängen (TN1, TN2) der beiden Motorphasen als Punkte einer Richtungsumkehr der induzierten Spannung in einer jeweils stromlosen Motorspule gemessen wird.

8. Schaltung zur fehlertoleranten, leistungsoptimalen Ansteuerung von bürstenlosen Gleichstrommotoren (14) mit fortlaufender Anwendung eines Schaltalgorithmus zur Gewinnung eines Kommutierungszeitpunkts bei einem Ausfall einer ungestörten permanenten Positionsformation;

- mit einer analogen Positionserkennung (1), insbesondere aus Zeitpunkten von Nulldurchgängen (TN1,TN2) zweier Motorphasen;
- mit einem ersten lesbaren Zähler (2) zur Auswertung einer Zeitdifferenz zwischen zwei unmittelbar aufeinander folgenden Nulldurchgängen der Spannungen zweier Motorphasen,
- mit einem Register (4) zur Speicherung der ausgewerteten Zeitdifferenz,
- mit einem binären Teiler (5) zur Halbierung der gespeicherte Zeitdifferenz,
- mit einem weiteren lesbaren Zähler (3), der zu Beginn jedes Motorzustands gestartet wird, zur Triggerung eines Zustandsautomaten (11) über die Kommutierungs-Zustandslänge,
- mit einem Summierer (6) zur Summierung der halben Zeitdifferenz zu dem Ausgang des weiteren lesbaren Zählers (3),
- mit einer Korrekturlogik (7) zur Berücksichtigung eines Korrekturwertes,
- mit einer Überwachungsschaltung (8) zur Überwachung eines Betriebes einer elektronisch gesteuerten Kommutierung, so dass bei Ausbleiben von verwendbaren Positionssignalen aus der analogen Positionserkennung (1) eine zuletzt ermittelte Kommutierungs-Zustandslänge weiter verwendbar ist,
- mit einem ladbaren Vergleichs-Register (9) zur Verarbeitung des berücksichtigten Ausgangs der Korrekturlogik (7) und des Ausgangs der Überwachungsschaltung (8),
- mit einem Vergleicher (10) zum Vergleich des Ausgangs des Vergleichs-Registers (9) mit dem Ausgang des weiteren lesbaren Zählers (3) und zur Auswertung des Kommutierungszeitpunkts für den Zustandsautomaten (11) des bürstenlosen Gleichstrom-Motors, sodass fortlaufend angepasste, fehlertolerante und leistungsoptimierte Kommutierungssignale vorgebbar sind.

9. Schaltung nach Anspruch 8, wobei das Vergleichs-Register (9) fortlaufend mit aktualisierten Kommutierungs-Statelängen als Kommutierungs-Zustandslängen ladbar ist, die einer Rampenfunktion folgen, um den Motor (14) zu starten.

10. Schaltung nach Anspruch 8, wobei eine bestimmte Drehzahl dem Motor aufprägbar ist, und das Vergleichs-Register (9) einmalig mit einer korrespondierenden Statelänge ladbar ist oder geladen wird.

11. Verfahren zur fehlertoleranten leistungsoptimalen Ansteuerung von BLDC-Motoren nach Anspruch 1, mit der Schaltung nach Anspruch 8 , wobei beliebige pulsweitenmodulierte (PWM) Signale zur Ansteuerung des Motors (14) in der Schalter-Halbbrücken (13) genutzt werden oder gänzlich ohne PWM gearbeitet wird.

**Claims**

1. A method for a fault-tolerant, performance-optimized control of a brushless direct current motor (BLDC; 14) by continuously updated commutation times, which follow a switching algorithm on absence of undisturbed, continuous position information obtained or determined, wherein

- a time difference ($\Delta$T) between the times (TN1, TN2) of two immediately consecutive zero crossings of the voltages of two motor phases are measured,
- half a time difference ($\Delta$T/2) is calculated (5),
- a commutation of the temporally succeeding motor phase is carried out after passing of the half time difference ($\Delta$T/2), calculated from the time (TN2) of the zero crossing of the measured second motor phase,
- in the absence of undisturbed, continuous position information from an analogue position sensing (1) a determined last commutation state length continues to be used,
- these process steps to continue, wherein the switching algorithm to the next commutation ($T_{commutation}$ = TN2 + ($\Delta$T/2)) is continued continuously for all phases and is applied to the fault-tolerant and performance-optimized control of the brushless direct current motor.

2. The method of claim 1, wherein the amount of the half time difference ($\Delta$T/2) is corrected, as a time is taken into account in the calculation that is required to reduce the energy in a motor phase used for position measurement on switching into the non-active powered state.

3. The method of claim 1 or 2, wherein the commutation time ($T_{commutation}$) is subsequently corrected for an adjusted operation corresponding to the torque characteristics, which are predetermined by a motor geometry, such as construction form, number of rotor/stator poles.

4. The method of claim 1, wherein

- an analogue input circuit (ADC, 1) is provided which provides position information, which is prepared filtered to a subsequent digital control unit;
- the digital control unit comprises two programmable counters (2, 3), a state machine (11), some buffer memories, and a decoder;
- one counter (2) evaluates the position information in each case between the successive states ($\Delta$T = (TN2-TN1)) and stores an evaluated difference in a buffer memory (4);
- the other counter (3) is started at the beginning of each motor condition;
- the state machine (11) is triggered when the other counter (3) reaches a predetermined value (TN2 + $\Delta$T/2), and the state machine performs commutation of the motor signals and activates the respective subsequent state;
- motor control takes place with switch half-bridges (13), and the control signals are decoded for the motor directly from a state vector.

5. The method of claim 4, wherein the difference is measured.

6. A method for performing performance-optimized control according to claim 5, wherein a microprocessor makes time measurements and calculations for implementing the algorithm, and generates motor control signals via software or a combination of hardware and software.

7. A method for performance-optimized control according to claim 1, wherein the time difference ($\Delta$T) between two directly successive zero crossings (TN1, TN2) of the two motor phases are measured as points on a direction reversal of the induced voltage in a currentless motor coil in each case.

8. A circuit for fault-tolerant, performance-optimized control of brushless direct current motors (14) with continuous application of a switching algorithm to obtain a commutation time in case of failure of an undisturbed permanent position formation;

- with an analogue position sensing (1), in particular, from times of zero-crossings (TN1, TN2) of two motor phases;
- with a first readable counter (2) for evaluating a time difference between two immediately consecutive zero crossings of the voltage of two motor phases,
- with a register (4) for storing the evaluated time difference,
- with a binary divider (5) for halving the stored time difference,
- with a further readable counter (3), which is started at the beginning of each motor state, for triggering a state machine (11) via the commutation state length,

- with an adder (6) for summing half the time difference to the output of the further readable counter (3),
- with a correction logic (7) to take account of a correction value,
- with a monitoring circuit (8) for monitoring operation of an electronically controlled commutation, so that in the absence of usable position signals from the analogue position sensing (1) a last determined commutation state length can still be used,
- with a loadable comparison register (9) for processing the considered output of the correction logic (7) and the output of the monitoring circuit (8),
- with a comparator (10) for comparing the output of the comparison register (9) with the output of the further readable counter (3) and evaluating the commutation time of the state machine (11) of the brushless direct current motor, so continuously adjusted fault-tolerant and performance-optimized commutation signals can be specified.

9. The circuit of claim 8, wherein the comparison register (9) can be continuously loaded with updated commutation state lengths as commutation state lengths, that follow a ramp function to start the motor (14).

10. The circuit of claim 8, wherein a specific rotational speed can be impressed on the motor, and the comparison register (9) can be or is loaded once with a corresponding state length.

11. A method for fault-tolerant performance-optimized control of BLDC motors according to claim 1, comprising the circuit of claim 8, wherein any pulse width modulated (PWM) signals for controlling the motor (14) in the switch half-bridge (13) are used or worked entirely without PWM.

**Revendications**

1. Procédé d'excitation avec une puissance optimale, tolérante aux pannes d'un moteur à courant continu sans balais (BLDC ; 14) par des moments de commutation actualisés en continu, qui sont obtenus ou déterminés suivant un algorithme de commutation, dans le cas d'une absence d'une information de position permanente, non perturbée, dans lequel

- une différence de temps ($\Delta$T) entre les moments (TN1, TN2) de deux passages par zéro immédiatement consécutifs des tensions de deux phases moteur est mesurée,
- une demi-différence de temps ($\Delta$T/2) est calculée (5),
- une commutation de la prochaine phase moteur qui lui succède dans le temps après écoulement de la demi-différence de temps ($\Delta$T/2) est effectuée, calculée à partir du moment (TN2) du passage par zéro de la deuxième phase moteur mesurée,
- en cas d'absence de l'information de position permanente, non perturbée à partir d'une détection de position analogique (1), une longueur d'état de commutation déterminée en dernier continue d'être utilisée,
- ces étapes de procédé se poursuivent, dans lequel l'algorithme de commutation pour la prochaine commutation ($T_{commutation}$ = TN2 + ($\Delta$T/2)) se poursuit en continu pour toutes les phases et est utilisé pour l'excitation avec une puissance optimale et tolérante aux pannes du moteur à courant continu sans balais.

2. Procédé selon la revendication 1, dans lequel la valeur de la demi-différence ($\Delta$T/2) est corrigée, en tenant compte dans le calcul d'un temps, qui est nécessaire à la suppression de l'énergie dans une phase moteur utilisée pour la mesure de position lors de la commutation dans l'état non activement alimenté en courant.

3. Procédé selon la revendication 1 ou 2, dans lequel le moment de commutation ($T_{commutation}$) est corrigé ultérieurement pour un fonctionnement adapté conformément aux lignes caractéristiques de couple, qui est prédéfinie par une géométrie de moteur, telle que forme de construction, nombre de pôles de rotor/stator.

4. Procédé selon la revendication 1, dans lequel

- un circuit d'entrée analogique (ADC, 1) est prévu, qui fournit une information de position, qui sont mises à disposition filtrées à une unité de commande numérique successive ;
- l'unité de commande numérique de deux compteurs programmables (2, 3), comprend un automate d'état (11), quelques mémoires tampon et un décodeur ;
- l'un des compteurs (2) analyse l'information de position entre respectivement les états consécutifs ($\Delta$T = (TN2 - TN1)) et dépose une différence analysée dans une mémoire tampon (4) ;

- l'autre compteur (3) est lancé au début de chaque état de moteur ;
- l'automate d'état (11) est déclenché, lorsque l'autre compteur (3) atteint une valeur prédéfinie (TN2 + $\Delta$T/2), et l'automate d'état exécute la commutation des signaux moteur et active l'état suivant respectif ;
- l'excitation du moteur se fait par des interrupteurs-demi-ponts (13), et les signaux d'excitation pour le moteur sont décodés directement depuis un vecteur d'état.

5. Procédé selon la revendication 4, dans lequel la différence est mesurée.

6. Procédé d'excitation avec une puissance optimale selon la revendication 5, dans lequel un microprocesseur procède pour la mise en oeuvre de l'algorithme à des mesures de temps et des calculs, et génère des signaux d'excitation de moteur via un logiciel ou une combinaison de matériel et de logiciel.

7. Procédé d'excitation avec une puissance optimale selon la revendication 1, dans lequel la différence de temps ($\Delta$T) entre les deux passages par zéro (TN1, TN2) immédiatement consécutifs des deux phases moteur est mesurée en tant que points d'une inversion de sens de direction de la tension induite dans une bobine moteur respectivement hors tension.

8. **Circuit d'excitation** avec une puissance optimale, tolérante aux pannes de moteurs à courant continu sans balais (14) avec application continue d'un algorithme de commutation pour l'obtention d'un moment de commutation dans le cas d'une absence d'une information de position permanente, non perturbée ;

   - avec une détection de position analogique (1), en particulier à partir de moments de passages par zéro (TN1, TN2) de deux phases moteur ;
   - avec un premier compteur lisible (2) pour analyser une différence de temps entre deux passages par zéro immédiatement consécutifs des tensions de deux phases moteur,
   - avec un registre (4) pour enregistrer la différence de temps analysée,
   - avec un diviseur binaire (5) pour diviser par deux la différence de temps enregistrée,
   - avec un autre compteur lisible (3), qui est lancé au début de chaque état de moteur, pour déclencher un automate d'état (11) via les longueurs d'état de commutation,
   - avec un sommateur (6) pour additionner la demi-différence de temps à la sortie de l'autre compteur lisible (3),
   - avec une logique de correction (7) pour tenir compte d'une valeur de correction,
   - avec un circuit de surveillance (8) pour surveiller un fonctionnement d'une commutation à commande électronique, si bien qu'en cas d'absence de signaux de position utilisables à partir de la détection de position analogique (1), une longueur d'état de commutation déterminée en dernier continue d'être utilisable,
   - avec un registre de comparaison chargeable (9) pour traiter la sortie prise en compte de la logique de correction (7) et la sortie du circuit de surveillance (8),
   - avec un comparateur (10) pour comparer la sortie du registre de comparaison (9) avec la sortie de l'autre compteur lisible (3) et pour analyser le moment de commutation pour l'automate d'état (11) du moteur à courant continu sans balais, si bien que des signaux de commutation avec une puissance optimale, tolérante aux pannes, adaptés en continu peuvent être prédéfinis.

9. Circuit selon la revendication 8, dans lequel le registre de comparaison (9) peut être chargé en continu avec des longueurs d'état de commutation actualisées en tant que longueurs d'état de commutation, qui suivent une fonction rampe, pour lancer le moteur (14).

10. Circuit selon la revendication 8, dans lequel une vitesse de rotation déterminée peut être imprimée au moteur, et le registre de comparaison (9) peut être chargé ou est chargé une seule fois avec une longueur d'état correspondante.

11. Procédé d'excitation avec une puissance optimale tolérante aux pannes de moteurs BLDC selon la revendication, avec le circuit selon la revendication 8, dans lequel n'importe quels signaux modulés en largeur d'impulsion (PWM) sont utilisés pour l'excitation du moteur (14) dans les interrupteurs-demi-ponts (13) ou est traité complètement sans PWM.

Kommutierungszeitpunkte werden fortlaufend aktualisiert

Kommutierungszeitpunkt

Nulldurchgang der freilaufenden Motorphase

$TN2' + \Delta T /2$

$TN2'$

$TN2 = TN1'$

$TN2 + \Delta T/2$

$\Delta T = (TN2 - TN1)$

$TN1$

Motorphasen

U
V
W

Motorzustände

1  2  3  4  5  6

$V_{DD}$
$V_{DD}/2$
$0V$

*Fig. 1*

9

Fig. 2

Fig. 3

Fig. 2a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200137419 A
- EP 231046 A, Philips
- JP 2002034277 A
- US 5317243 A